Europäisches Patentamt

European Patent Office

Office européen des brevets

(19)

(11) Numéro de publication: **0 175 629 B1**

(12) **FASCICULE DE BREVET EUROPEEN**

(45) Date de publication de fascicule du brevet:
21.11.91

(51) Int. Cl.⁵: **A01D 34/66, A01D 34/76**

(21) Numéro de dépôt: 85440053.8

(22) Date de dépôt: 18.09.85

Demande divisionnaire 88109807 déposée le
20.06.88.

(54) **Faucheuse rotative.**

(30) Priorité: 19.09.84 FR 8414487

(43) Date de publication de la demande:
26.03.86 Bulletin 86/13

(45) Mention de la délivrance du brevet:
21.11.91 Bulletin 91/47

(84) Etats contractants désignés:
**AT DE GB IT NL SE**

(56) Documents cités:
EP-A- 0 099 314          FR-A- 1 534 878
FR-A- 2 262 484          FR-A- 2 294 626
FR-A- 2 332 694          FR-A- 2 351 578
FR-A- 2 394 239          FR-A- 2 521 389
GB-A- 2 002 622          GB-A- 2 089 637

(73) Titulaire: KUHN S.A.
4, Impasse des Fabriques
F-67700 Saverne(FR)

(72) Inventeur: Wolff, Michel
18a, rue du Général Leclerc Schwindratzheim
W-67270 Hochfelden(DE)

Il est rappelé que: Dans un délai de neuf mois à compter de la date de publication de la mention de la
délivrance du brevet européen, toute personne peut faire opposition au brevet européen délivré, auprès de
l'Office européen des brevets. L'opposition doit être formée par écrit et motivée. Elle n'est réputée formée
qu'après paiement de la taxe d'opposition (art. 99(1) Convention sur le brevet européen).

## Description

La présente invention concerne une faucheuse rotative munie d'un premier groupe d'organes de coupe générant un premier plan de coupe et d'un deuxième groupe d'organes de coupe générant un deuxième plan de coupe plus bas que le premier plan de coupe, lesdits organes de coupe étant disposés au-dessus d'un carter, de telle sorte que le long dudit carter, une paire quelconque d'organes de coupe adjacents comporte un organe de coupe du premier groupe et un organe de coupe du deuxième groupe, lesdits organes de coupe étant chacun lié à un arbre dirigé vers le haut, qui est guidé en rotation dans un palier s'étendant à la partie supérieure dudit carter, lesdits organes de coupe étant entraînés en rotation par des moyens d'entraînement logés dans ledit carter pouvant se désynchroniser et comportant au moins une roue fixée sur chaque arbre dirigé vers le haut, les arbres, respectivement les roues et les paliers, étant identiques pour au moins tous les organes de coupe entraînés par le bas, les roues de l'ensemble des organes de coupe s'étendant au moins sensiblement au même niveau dans le carter.

On connaît une telle faucheuse (GB-A-2.002.622) dont les moyens d'entraînement comportent notamment des roues arbrées entraînées par une courroie. Ce mécanisme d'entraînement ne permet pas d'assurer une transmission synchrone du mouvement. En effet, la courroie peut glisser sur les roues pendant le travail de la faucheuse lorsque l'un ou l'autre des organes de coupe qui sont liés aux roues, est freiné ou bloqué pendant un certain laps de temps pour une raison quelconque (obstacles, paquets de fourrage lourd, etc.).

Or, on sait, lorsque la désynchronisation entre deux organes de coupe adjacents atteint une certaine valeur et que les couteaux qui équipent ces organes de coupe entrent en collision, que ces collisions peuvent entraîner la rupture desdits couteaux ou de leur fixation.

Compte tenu de la vitesse de rotation élevée des organes de coupe, un couteau cassé ou arraché de son organe de coupe peut provoquer des accidents graves sur des personnes qui se trouvent à proximité de la faucheuse ou même sur l'utilisateur de la machine. Par ailleurs, un organe de coupe qui est muni d'un couteau cassé ou sur lequel manque un couteau, réalise un travail non satisfaisant.

Pour pallier à ce grave inconvénient, la faucheuse connue comporte deux groupes d'organes de coupe. Dans les organes de coupe du premier groupe, les couteaux équipant ceux-ci sont fixés à un niveau plus élevé que les couteaux des organes de coupe du deuxième groupe. De cette sorte, les organes de coupe du premier groupe génèrent un plan de coupe plus haut que les organes de coupe du deuxième groupe. Ainsi, les couteaux de deux organes de coupe adjacents ne peuvent théoriquement plus entrer en collision l'un avec l'autre, même si les positions desdits organes de coupe se sont désynchronisées.

L'inconvénient de cette faucheuse connue réside dans le fait qu'en pratique cependant une telle collision peut se produire, étant donné que la différence de hauteur entre le plan de coupe généré par les organes de coupe du premier groupe et le plan de coupe généré par les organes de coupe du deuxième groupe est obtenue par un montage différent des couteaux sur les organes de coupe. Avec cet agencement en effet, la différence de niveau entre les deux plans de coupe ne peut être que relativement limitée. En fait, dans la faucheuse connue, la face inférieure des couteaux d'un organe de coupe générant un plan de coupe haut s'étend sensiblement au même niveau que la face supérieure des couteaux d'un organe de coupe générant un plan de coupe bas. Il suffit alors qu'un couteau soit légèrement déformé pour qu'il puisse y avoir collision avec un couteau d'un organe de coupe adjacent. En sus, les couteaux sont des pièces d'usure qui nécessitent d'être fréquemment remplacées. Il peut alors arriver que, lors du remplacement, les couteaux soient mal montés, de sorte que là aussi, une collision sera inévitable en cas de désynchronisation des organes de coupe.

Il convient ensuite encore de noter que la fabrication des roues arbrées de la faucheuse connue est relativement onéreuse.

Une faucheuse similaire est également connue par FR-A-2 521 389. Dans cette faucheuse connue, le décalage en hauteur entre les plans de coupe générés par les organes de coupe du premier groupe et les plans de coupe générés par les organes de coupe du deuxième groupe, est réalisé par des arbres de longueurs différentes.

La présente invention a pour but de remédier aux inconvénients de la faucheuse connue (GB-A-2.002.622, ou FR-A-2521 385) en creant une faucheuse pouvant être produite au meilleur coût, sans toutefois que l'aspect sécurité soit négligé.

A cet effet, la faucheuse rotative selon la présente invention est caractérisée par le fait que les arbres et les roues sont des pièces séparées avant montage, et que chaque roue peut être montée dans deux positions différentes sur un arbre, une première position adaptée à un organe de coupe du premier groupe et une deuxième position adaptée à un organe de coupe du deuxième groupe, et que les paliers guidant en rotation les arbres des organes de coupe du premier groupe sont plus éloignés du fond du carter que les paliers guidant en rotation les arbres des organes de coupe du deuxième groupe.

Avec cet agencement, le décalage entre le plan de coupe généré par les organes de coupe du premier groupe et le plan de coupe généré par les organes de coupe du deuxième groupe peut être plus important. En sus, le risque d'une collision entre couteaux après remplacement des couteaux usés est totalement éliminé, étant donné que l'on n'intervient pas sur la position des plans de coupe lors du remplacement des couteaux. Il convient enfin de noter que la fabrication des roues et des arbres est plus simple, donc moins onéreuse.

Une réalisation simple de l'invention est obtenue lorsque le moyeu de la roue est décalé axialement par rapport au plan de symétrie de la partie de la roue où se fait la transmission du mouvement, et que pour un organe de coupe du premier groupe, le moyeu se situe pour l'essentiel au-dessus dudit plan de symétrie, tandis que pour un organe de coupe du deuxième groupe, le moyeu se situe pour l'essentiel en-dessous dudit plan de symétrie.

Avantageusement, la roue est liée à l'arbre au moyen d'une liaison démontable.

Selon une caractéristique supplémentaire de l'invention, la partie supérieure du carter comporte des trous dans lesquels se centrent directement ou indirectement les paliers.

D'autres caractéristiques de l'invention apparaîtront dans les autres sous-revendications et dans la description suivante de quelques exemples de réalisation non limitatifs représentés sur le dessin annexé sur lequel :

- la figure 1 représente une vue arrière de la barre de coupe d'une faucheuse conforme à l'invention,
- la figure 2a représente une vue de la barre de coupe d'un premier exemple de réalisation d'une faucheuse selon l'invention, coupée suivant le plan IIa,
- la figure 2b représente une vue de la barre de coupe du premier exemple de réalisation d'une faucheuse selon l'invention, coupée suivant le plan IIb (l'organe de coupe a été tourné de 90°),
- la figure 3a représente une vue de la barre de coupe d'un deuxième exemple de réalisation d'une faucheuse selon l'invention, coupée suivant le plan IIIa,
- la figure 3b représente une vue de la barre de coupe du deuxième exemple de réalisation d'une faucheuse selon l'invention, coupée suivant le plan IIIb (l'organe de coupe a été tourné de 90°), et
- la figure 4 représente une coupe de la liaison arbreroue par le plan IV.

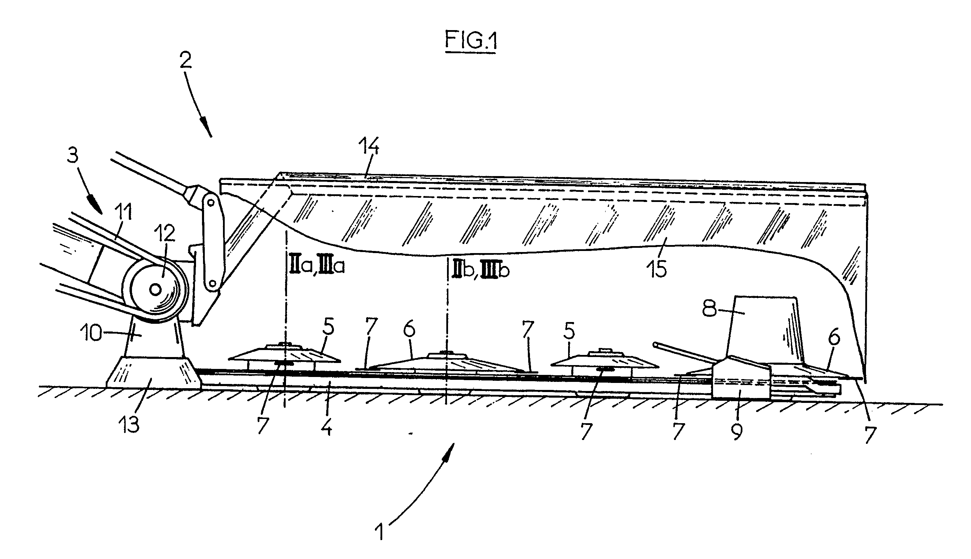

Sur la figure 1, est représentée la barre de coupe (1) d'une faucheuse (2). Cette faucheuse (2) comporte par ailleurs un dispositif d'attelage (3), qui n'est que partiellement représenté et qui permet d'atteler la barre de coupe (1) à un tracteur agricole par exemple, non représenté sur le dessin.

La barre de coupe (1) comporte un carter (4) dans lequel s'étendent des moyens d'entraînement des organes de coupe. Ces organes de coupe comportent dans l'exemple représenté, des disques (5, 6) s'étendant à la partie supérieure du carter (4) et munis d'outils de coupe tels que les couteaux (7). Les organes de coupe (5,7;6,7) sont répartis en deux groupes, un premier groupe formé par les organes de coupe (5,7), qui tournent dans un plan de coupe haut, et un deuxième groupe formé par les organes de coupe (6,7), qui tournent dans un plan de coupe bas. Le disque (6) situé à l'extrémité de la barre de coupe (1) éloignée du dispositif d'attelage (3), est surmonté par un dispositif d'andainage rotatif (8). Ce dispositif d'andainage rotatif (8) collabore avec un dispositif d'andainage fixe (9) pour réduire la largeur de l'andain de fourrage coupé déposé derrière la barre de coupe (1).

A l'extrémité de la barre de coupe (1) située du côté du dispositif d'attelage (3), s'étend un carter de renvoi (10). Ce carter de renvoi (10) sert à transmettre le mouvement depuis la courroie (11) jusqu'aux moyens d'entraînement s'étendant dans le carter (4) de la barre de coupe (1). A cet effet, le carter de renvoi (10) comporte une poulie (12) sur laquelle s'enroule la courroie (11) qui s'enroule par ailleurs sur une autre poulie, non représentée, soutenue par le dispositif d'attelage (3) et qui reçoit le mouvement de la prise de force du tracteur par l'intermédiaire d'un arbre de transmission également non représenté. Le carter de renvoi (10) sert également, d'une manière connue de l'homme de l'art, à lier la barre de coupe (1) au dispositif d'attelage (3).

Sous le carter de renvoi (10) est agencé un sabot (13) qui permet à cette extrémité de la barre de coupe (1) de glisser sur le sol et qui évite que du fourrage coupé ne puisse s'accrocher au carter de renvoi (10).

Au-dessus de la barre de coupe (1) s'étend un support (14) qui maintient un dispositif de protection (15).

Tel qu'il sera visible sur les figures ultérieures, les moyens d'entraînement logés dans le carter (4) ne peuvent pas empêcher que les organes de coupe (5,7;6,7) se desynchronisent pendant le travail. Pour éviter que les couteaux (7) ne puissent entrer en collision, les organes de coupe (5,7), tournent, comme dit précédemment, dans un plan de coupe s'étendant plus haut que celui dans lequel tournent les organes de coupe (6,7),. Les couteaux (7) peuvent ainsi balayer des zones communes en vue en plan, sans que lesdits couteaux (7) ne puissent se toucher, même s'ils balayent sensiblement en même temps lesdites zones après que les organes de coupe se soient désynchronisés.

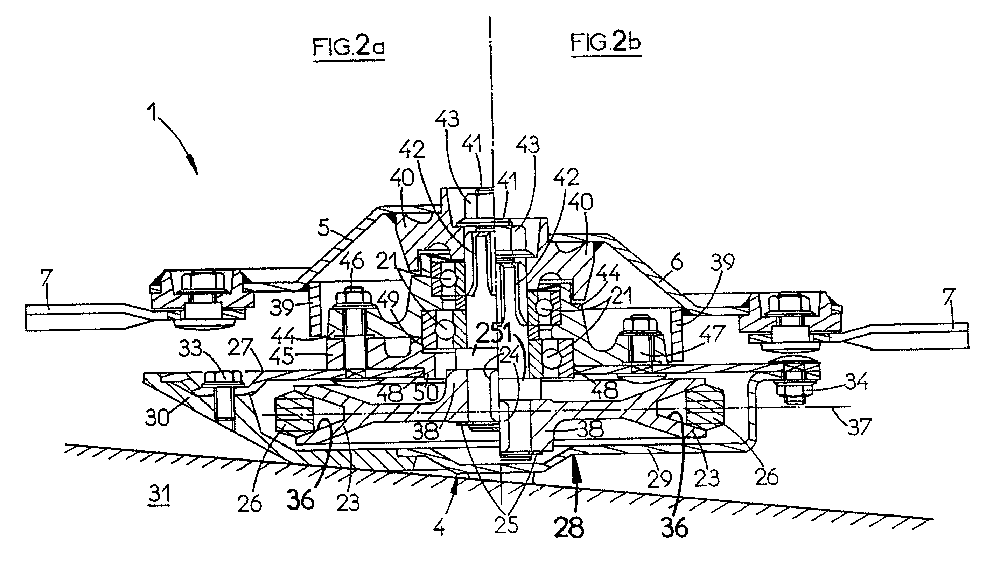

Les figures 2a et 2b montrent un premier exemple de réalisation de l'invention. Plus précisément, la figure 2a montre l'agencement d'un organe de coupe haut (5, 7), tandis que la figure 2b montre l'agencement d'un organe de coupe bas (6, 7).

Le disque (5) d'un organe de coupe haut (5, 7) et le disque (6) d'un organe de coupe bas (6, 7) sont munis de couteaux (7) qui y sont montés au moyen d'une liaison permettant à chaque couteau (7) de pivoter vers l'arrière (compte tenu du sens de rotation) et de se ranger sous le disque (5 ; 6) correspondant en cas de rencontre avec un obstacle.

Chaque disque (5 ; 6) est directement muni d'un entraîneur (40) qui y est fixé par soudure. L'ensemble est ensuite lié à un arbre (41) dirigé vers le haut. La liaison en rotation se fait au moyen d'un alésage cannelé réalisé dans l'entraîneur (40) qui collabore avec des cannelures (42) réalisées sur l'arbre (41), tandis que la liaison en translation se fait au moyen d'un écrou (43). L'arbre (41) est guidé en rotation dans un palier (44) par l'intermédiaire de deux roulements (21).

Les paliers (44) des organes de coupe hauts (5, 7) et les paliers (44) des organes de coupe bas (6, 7) sont identiques. Le décalage en hauteur des organes de coupe hauts (5, 7) est obtenu en interposant, entre le palier (44) et le dessus du carter (4), une entretoise (45) dont l'épaisseur est égale au décalage à obtenir entre un organe de coupe haut (5, 7) et un organe de coupe bas (6, 7).

L'entretoise (45) est avantageusement fixée au moyen des mêmes vis (46) qui fixent le palier (44) d'un organe de coupe haut (5, 7) sur le dessus du carter (4). A cet effet, on voit que ces vis (46) sont plus longues que les vis (47) qui fixent le palier (44) d'un organe de coupe bas (6, 7) sur le dessus du carter.

Afin de ne pas faire absorber les efforts que peuvent encaisser les organes de coupe (5, 7 ; 6, 7) pendant le travail uniquement par les vis (46) ou les vis (47), l'ensemble palier (44) - entretoise (45) d'un organe de coupe haut (5,7) ou le palier (44) d'un organe de coupe bas (6, 7) sont centrés dans le carter (4) qui comporte à cet effet des alésages (48).

Dans le cas d'un organe de coupe haut (5, 7) (figure 2a), le palier (44) est dans un premier temps centré dans l'entretoise (45) à l'aide du roulement inférieur (21). A cet effet, l'entretoise (45) comporte un alésage (49) dans lequel pénètre partiellement le roulement inférieur (21). Dans un deuxième temps, c'est l'entretoise (45) qui est centrée dans le carter (4) grâce à une partie de centrage (50) qui pénètre dans un alésage (48) du carter (4).

Dans le cas d'un organe de coupe bas (6, 7) (figure 2b), c'est directement le roulement inférieur (21) qui pénètre partiellement dans un alésage (48) du carter (4).

On remarquera que lors d'une intervention sur un organe de coupe haut (5, 7), il ne sera pas possible de mal monter celui-ci, puisque l'entretoise (45) reste en place.

A l'intérieur du carter (4), l'arbre (41) est lié à une roue (23). Cette liaison est démontable. Dans cet exemple, elle est réalisée au moyen d'une clavette (24) qui fait la liaison en rotation et au moyen d'un circlips (25) et d'un épaulement (251) de l'arbre (41) qui font la liaison en translation.

La roue (23) est entraînée par un organe de transmission sans fin tel que la courroie hexagonale (26).

Le carter (4) est constitué par un couvercle (27) sensiblement plan et par un fond (28). Ce fond (28), en forme d'auge, comporte une partie arrière (29) en tôle pliée et des moyens de glissement et de protection du disque (30). Ces moyens (30) permettent à la barre de coupe (1) de glisser sur le sol (31). A cet effet, ils ont une forme de ski. Ces moyens (30) sont fixés de manière démontable sur la partie arrière (29) et le couvercle (27) au moyen de vis (non représentées) et, à l'avant, sur le couvercle (27) seul à l'aide de vis (33). Le couvercle (27) et la partie arrière (29) sont, quant à eux, liés entre eux à l'arrière par des vis (34).

Tel que visible sur les figures 2a et 2b, l'arbre (41) d'un organe de coupe bas (6, 7) pénètre plus profondément dans le carter (4) que l'arbre (41) d'un organe de coupe haut (5, 7). Cette pénétration plus importante de l'arbre (41) d'un organe de coupe bas (6, 7) est engendrée par le fait qu'il n'est pas prévu d'entretoise (45) entre le palier (44) correspondant et le dessus du carter (4).

Pour permettre à la courroie (26) de tourner sensiblement dans le même plan, la partie de la roue (23) d'un organe de coupe haut (5, 7) et la partie de la roue (23) d'un organe de coupe bas (6, 7) où se fait la transmission du mouvement, c'est-à-dire la gorge (36), se trouvent sensiblement dans le même plan. Ce résultat a été obtenu par le fait que la roue (23) d'un organe de coupe bas (6, 7) occupe une autre position par rapport à son arbre (41) que la roue (23) d'un organe de coupe haut (5, 7). Pour ce faire, les roues (23) ont un moyeu (38) qui est décentré par rapport au plan de symétrie (37) de leur gorge (36). Ainsi, dans le cas d'un organe de coupe haut (5, 7), le moyeu (38) de la roue (23) se situe pour l'essentiel au-dessus du plan de symétrie (37) de la gorge (36), tandis que dans le cas d'un organe de coupe bas (6, 7), le moyeu (38) de la roue (23) se situe pour l'essentiel en-dessous du plan de symétrie (37) de sa gorge (36).

Sur les figures 2a et 2b, on voit encore que chaque disque (5, 6) est muni d'un organe d'arrêt (39) qui limite la rotation des couteaux (7) correspondants. Ceci permet de protéger le palier (44) correspondant lorsqu'un couteau (7) se range sous le disque.

Parallèlement, cet organe d'arrêt (39) peut également servir à rigidifier le disque.

Du reste, les organes d'arrêt (39) remplissent la fonction supplémentaire qui consiste à créer une chicane évitant l'enroulement de débris végétaux ou de corps filiformes quelconques autour du palier (44) et, de ce fait, l'introduction de tels débris végétaux ou corps quelconques entre les disques (5, 6) et lesdits paliers (44). Les roulements (21) sont ainsi efficacement protégés, ce qui augmente leur durée de vie.

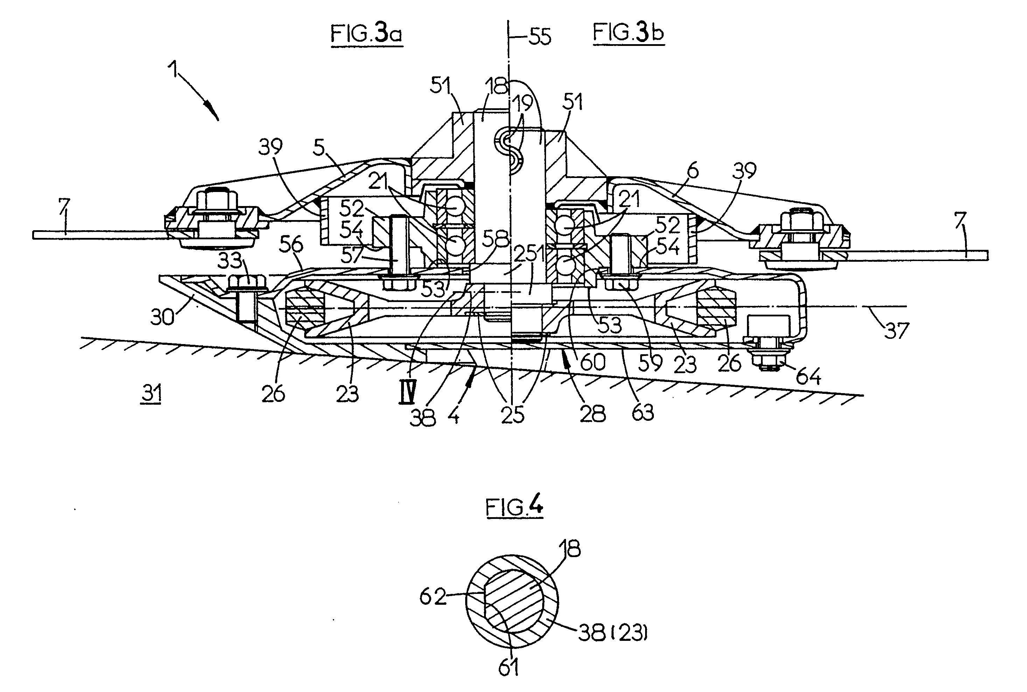

Sur les figures 3a et 3b est représenté un deuxième exemple de réalisation de l'invention. Les pièces identiques à celles décrites plus haut gardent le même repère et ne seront plus redécrites en détail.

Dans cet exemple, les disques (5 ; 6) sont directement munis d'un entraîneur (51) qui y est soudé. L'ensemble est monté sur un arbre (18) dirigé vers le haut et y est fixé au moyen d'une goupille (19). L'arbre (18) est guidé en rotation dans un palier (52) par l'intermédiaire de deux roulements (21). Les paliers (52) des organes de coupe hauts (5, 7) et des organes de coupe bas (6, 7) sont également identiques. Ces paliers (52) comportent deux faces d'appui (53 et 54). Ces faces d'appui (53, 54) sont décalées axialement entre elles d'une distance égale au décalage qui doit exister entre les organes de coupe hauts (5, 7) et les organes de coupe bas (6, 7). Par ailleurs, les faces d'appui (53 et 54) sont également décalées radialement entre elles. Ainsi, la face d'appui (54) est radialement plus éloignée de l'axe (55) du palier (52) que la face d'appui (53).

Ainsi, pour un organe de coupe haut (5, 7), le palier (52) repose sur la partie supérieure (56) du carter (4) par l'intermédiaire de la face d'appui (53) et y est fixé à l'aide de vis (57). Dans ce cas, la partie supérieure (56) du carter (4) comporte un petit alésage (58) qui autorise le passage de l'arbre (18) dans le carter (4). Ce petit alésage (58) a un rayon plus petit que la distance séparant radialement la face d'appui (53) de l'axe (55) du palier (52).

Pour un organe de coupe bas (6, 7), le palier (52) repose sur la partie supérieure (56) du carter (4) par l'intermédiaire de la face d'appui (54) et y est fixé à l'aide de vis (59). Dans ce cas, la partie supérieure (56) du carter (4) comporte un grand alésage (60) qui autorise le passage de l'arbre (18) et de la face d'appui (53) dans le carter (4). Ce grand alésage (60) a un rayon plus grand que la distance séparant radialement la face d'appui (53) de l'axe (55) du palier (52), mais plus petit que la distance séparant radialement la face d'appui (54) de l'axe (55) du palier (52).

Dans ce deuxième exemple de réalisation de l'invention, la roue (23) est aussi liée à l'arbre (18) de manière démontable. La liaison en rotation est assurée par un méplat (61) réalisé sur l'arbre (18), qui collabore avec un trou broché (62) réalisé dans le moyeu (38) de la roue (23) (voir figure 4).

Le carter (4) est réalisé légèrement différemment que dans l'exemple précédent. En effet, la partie supérieure (56) du carter (4) est pliée à l'arrière suivant un U couché de sorte que la partie arrière (63) du fond (28) est plane. Comme dans l'exemple précédent, des moyens de glissement et de protection du disque (30), sont fixés sur la partie arrière (63) au moyen de vis (non représentées) pour former le fond (28). Ce fond (28) est ensuite fixé sur la partie supérieure (56) à l'aide de vis (33) et (64).

## Revendications

1. Faucheuse rotative (2) munie d'un premier groupe d'organes de coupe (5, 7) générant un premier plan de coupe et d'un deuxième groupe d'organes de coupe (6, 7) générant un deuxième plan de coupe plus bas que ledit premier plan de coupe, lesdits organes de coupe (5, 7 ; 6, 7) étant disposés au-dessus d'un carter (4), de telle sorte que le long dudit carter (4) une paire quelconque d'organes de coupe (5, 7 ; 6, 7) adjacents comporte un organe de coupe (5, 7) du premier groupe et un organe de coupe (6, 7) du deuxième groupe, lesdits organes de coupe (5, 7 ; 6, 7) étant chacun lié à un arbre (18, 41) dirigé vers le haut qui est guidé en rotation dans un palier (44, 52) s'étendant à la partie supérieure (27, 56) dudit carter (4), lesdits organes de coupe (5, 7 ; 6, 7) étant entraînés en rotation par des moyens d'entraînement (23, 26) logés dans ledit carter (4) pouvant se désynchroniser et comportant au moins une roue (23) fixée sur chaque arbre (18, 41) dirigé vers le haut, les arbres (18, 41), respectivement les roues (23) et les paliers (44, 52), étant identiques pour au moins tous les organes de coupe (5, 7 ; 6, 7) entraînés par le bas, les roues (23) de l'ensemble des organes de coupe (5, 7 ; 6, 7) s'étendant au moins sensiblement au même niveau dans le carter (4), caractérisée par le fait que les arbres (18, 41) et les roues (23) sont des pièces séparées avant montage, et que chaque roue (23) peut être montée dans deux positions différentes sur un arbre (18, 41), une première position adaptée à un organe de coupe (5, 7) du premier groupe et une deuxième position adaptée à un organe de coupe (6, 7) du deuxième groupe, et que les paliers (44, 52) guidant en rotation les arbres (18, 41) des organes de coupe (5, 7) du premier groupe sont plus éloignés du fond (28) du carter (4) que les paliers (44, 52) guidant en rotation les arbres (18, 41) des organes de coupe (6, 7) du deuxième groupe.

2. Faucheuse selon la revendication 1, caractérisée par le fait que la roue (23) comporte un moyeu (38) qui est décalé axialement par rapport au plan de symétrie (37) de la partie (36) de la roue (23) où se fait la transmission du mouvement, et que pour un organe de coupe (5, 7) du premier groupe, le moyeu (38) se situe pour l'essentiel au-dessus dudit plan de symétrie (37), tandis que pour un organe de coupe (6, 7) du deuxième groupe, le moyeu (38) se situe pour l'essentiel en-dessous dudit plan de symétrie (37).

3. Faucheuse selon la revendication 1 ou 2, caractérisée par le fait que la roue (23) est liée à l'arbre (18, 41) au moyen d'une liaison démontable.

4. Faucheuse selon l'une au moins des revendications 1 à 3, caractérisée par le fait que la position du palier (44) d'un organe de coupe (5, 7) du premier groupe par rapport au carter (4) est déterminée par une entretoise (45).

5. Faucheuse selon l'une au moins des revendications 1 à 3, caractérisée par le fait que la partie supérieure (56) du carter (4) comporte des trous circulaires (58, 60) de rayon différent, tandis que le palier (52) comporte deux faces d'appui (53, 54) décalées entre elles suivant l'axe (55) du palier (52) et ayant des positions radiales différentes, de sorte que la plus haute (54) desdites faces d'appui (53, 54) s'étend radialement à une distance supérieure au rayon du grand trou (60), tandis que la plus basse (53) s'étend radialement à une distance comprise entre le rayon du grand trou (60) et celui du petit trou (58).

6. Faucheuse selon la revendication 4, caractérisée par le fait que les entretoises (45), ainsi que les endroits de la partie supérieure (27) du carter (4), situés sous les organes de coupe (6, 7) du deuxième groupe s'étendent dans le voisinage d'organes d'arrêt (39) aménagés sur les organes de coupe (5, 7 ; 6, 7) pour former une chicane.

7. Faucheuse selon l'une au moins des revendications 1 à 6, caractérisée par le fait que la partie supérieure (27) du carter (4) comporte des trous (48, 60) dans lesquels se centrent directement ou indirectement les paliers (44, 52).

## Claims

1. Rotary mower (2) provided with a first group of cutting elements (5, 7) generating a first cutting plane and a second group of cutting elements (6, 7) generating a second cutting plane which is lower than said first cutting plane, said cutting elements (5, 7 ; 6, 7) being arranged above a gearbox (4) in such a manner that along said gearbox (4) any pair of adjacent cutting elements (5, 7 ; 6, 7) includes one cutting element (5, 7) of the first group and one cutting element (6, 7) of the second group, each of said cutting elements (5, 7 ; 6, 7) being connected to an upwardly directed shaft (18, 41) which is guided in rotation in a bearing (44, 52) extending at the upper portion (27, 56) of said gearbox (4), said cutting elements (5, 7 ; 6, 7) being driven in rotation by driving means (23, 26) housed in said gearbox (4) and which are able to be desynchronized and provided with at least one wheel (23) fastened to each upwardly directed shaft (18, 41), the shafts (18, 41), respectively the wheels (23) and the bearings (44, 52) being identical for at least all the cutting elements (5, 7 ; 6, 7) driven from the bottom, the wheels (23) of all the cutting elements (5, 7 ; 6, 7) extending at least substantially at the same level in the gearbox (4), characterized in that the shafts (18, 41) and the wheels (23) are separate parts before their mounting and that each wheel (23) may be mounted on a shaft (18, 41) in two different positions, a first position adapted to a cutting element (5, 7) of the first group and a second position adapted to a cutting element (6, 7) of the second group and that the bearings (44, 52) guiding in rotation the shafts (18, 41) of the cutting elements (5, 7) of the first group are farther away from the bottom (28) of the gearbox (4) than the bearings (44, 52) guiding in rotation the shafts (18, 41) of the cutting elements (6, 7) of the second group.

2. Mower according to Claim 1, characterized in that the wheel (23) comprises a hub (38) which is axially offset in relation to the plane of symmetry (37) of the portion (36) of the wheel (23) where the transmission of the movement takes place, and that the hub (38) is essentially located above said plane of symmetry (37) for a cutting element (5, 7) of the first group and essentially under said plane of symmetry (37) for a cutting element (6, 7) of the second group.

3. Mower according to Claim 1 or 2, characterized in that the wheel (23) is connected to the shaft (18, 41) by means of a dismountable connection.

4. Mower according to at least one of Claims 1 to 3, characterized in that the position of the bearing (44) of a cutting element (5, 7) of the first group in relation to the gearbox (4) is defined by a brace (45).

5. Mower according to at least one of Claims 1 to 3, characterized in that the upper portion (56) of the gearbox (4) is provided with circular holes (58, 60) of different radii, while the bearing (52) is provided with two support faces (53, 54) offset in relation to one another along the axis (55) of the bearing (52) and with different radial positions, so that the highest (54) of said support faces (53, 54) extends radially a greater distance than the radius of the larger hole (60), while the lowest (53) extends radially a distance between the radius of the larger hole (60) and the radius of the smaller hole (58).

6. Mower according to Claim 4, characterized in that the braces (45) as well as the places of the upper part (27) of the gearbox (4), located under the cutting elements (6, 7) of the second group, extend in the vicinity of stop members (39) arranged on the cutting elements (5, 7 ; 6, 7) so as to form a baffle.

7. Mower according to at least one of the Claims 1 to 6, characterized in that the upper portion (27) of the gearbox (4) is provided with holes (48, 60) in which are directly or indirectly centered the bearings (44, 52).

**Patentansprüche**

1. Kreiselmäher (2) mit einer ersten Gruppe von Schneidorganen (5, 7), die eine erste Schnittebene erzeugen, und einer zweiten Gruppe von Schneidorganen (6, 7), die eine zweite Schnittebene erzeugen, die tiefer liegt als die erste Schnittebene, welche Schneidorgane (5, 7; 6, 7) über einem Gehäuse (4) derart angeordnet sind, dass entlang des Gehäuses (4) irgendein Paar benachbarter Schneidorgane (5, 7; 6, 7) ein Schneidorgan (5, 7) der ersten Gruppe und ein Schneidorgan (6, 7) der zweiten Gruppe umfasst, welche Schneidorgane (5, 7 ; 6, 7) jeweils mit einer aufrechtstehenden Welle (18, 41) verbunden sind, die drehbar in einem Lager (44, 52) geführt ist, das sich zum Oberteil (27, 56) des Gehäuses (4) erstreckt, wobei die Schneidorgane (5, 7; 6, 7) durch im Gehäuse (4) untergebrachte Antriebselemente (23, 26) in Drehung versetzt werden, die aus dem Gleichlauf geraten können und zumindest ein auf jeder aufrechtstehenden Welle (18, 41) befestigtes Rad (23) aufweisen, wobei die Wellen (18, 41) bzw. die Räder (23) und die Lager (44, 52) für zumindest alle von unten angetriebenen Schneidorgane (5, 7; 6, 7) gleich sind, die Räder (23) der gesamten Schneidorgane (5, 7; 6, 7) sich zumindest im wesentlichen auf das gleiche Niveau im Gehäuse (4) erstrecken, dadurch gekennzeichnet, dass die Wellen (18, 41) und die Räder (23) vor der Montage separate Stücke sind und dass jedes Rad (23) in zwei verschiedenen Positionen auf einer Welle (18, 41) montiert werden kann, wobei eine erste Position für ein Schneidorgan (5, 7) der ersten Gruppe und eine zweite Position für ein Schneidorgan (6, 7) der zweiten Gruppe geeignet ist, und dass die die Wellen (18, 41) der Schneidorgane (5, 7) der ersten Gruppe drehbar führenden Lager (44, 52) weiter vom Boden (28) des Gehäuses (4) entfernt sind als die die Wellen (18, 41) der Schneidorgane (6, 7) der zweiten Gruppe drehbar führenden Lager (44, 52).

2. Mäher nach Anspruch 1, dadurch gekennzeichnet, dass das Rad (23) eine Nabe (38) aufweist, die axial in bezug auf die Symmetrieebene (37) des Teiles (36) des Rades (23), wo die Bewegungsübertragung stattfindet, versetzt ist, und dass sich die Nabe (38) bei einem Schneidorgan (5, 7) der ersten Gruppe im wesentlichen oberhalb der Symmetrieebene (37) befindet, während sich die Nabe (38) bei einem Schneidorgan (6, 7) der zweiten Gruppe (38) im wesentlichen unterhalb der Symmetrieebene (37) befindet.

3. Mäher nach Anspruch 1 oder 2, dadurch gekennzeichnet, dass das Rad (23) mit der Welle (18, 41) durch eine lösbare Verbindung verbunden ist.

4. Mäher nach zumindest einem der Ansprüche 1 bis 3, dadurch gekennzeichnet, dass die Position des Lagers (44) eines Schneidorgans (5, 7) der ersten Gruppe in bezug auf das Gehäuse (4) durch ein Zwischenstück (45) bestimmt wird.

5. Mäher nach zumindest einem der Ansprüche 1 bis 3, dadurch gekennzeichnet, dass der Oberteil (56) des Gehäuses (4) kreisrunde Löcher (58, 60) mit verschiedenem Radius aufweist, während des Lager (52) zwei gegeneinander entlang der Achse (55) des Lagers (52) versetzte Auflageflächen (53, 54) aufweist, die verschiedene radiale Positionen haben, derart, dass sich die obere (54) dieser Auflageflächen (53, 54) radial in einem grösseren Abstand vom Radius des grossen Lochs (60) erstreckt, während sich die untere (53) radial in einem Abstand zwischen dem Radius des grossen Lochs (60) und jenem des kleinen Lochs (58) erstreckt.

6. Mäher nach Anspruch 4, dadurch gekennzeichnet, dass die Zwischenstücke (45) sowie die unter den Schneidorganen (6, 7) der zweiten Gruppe befindlichen Stellen des Oberteils (27) des Gehäuses (4) unter Bildung eines Ablenkelements in die Nähe der auf den Schneidorganen (5, 7; 6, 7) befindlichen Abschlussorgane (39) ragen.

7. Mäher nach zumindest einem der Ansprüche 1 bis 6, dadurch gekennzeichnet, dass der Oberteil (27) des Gehäuses (4) Löcher (48, 60) umfasst, in welchen sich die Lager (44, 52) direkt oder indirekt zentrieren.

## FIG.1

EP 0 175 629 B1

FIG.2a        FIG.2b

FIG.3a   FIG.3b   FIG.4